# EUROPEAN PATENT SPECIFICATION

(11) **EP 4 568 178 B1**
(45) Date of publication and mention of the grant of the patent: **14.10.2026**
(21) Application number: 23215272.8
(22) Date of filing: 08.12.2023
(51) Int. Cl.: H04L 9/40, G01S 5/18, H04W 4/90

(54) **METHOD, SYSTEM, PROGRAM ELEMENT AND COMPUTER-READABLE MEDIUM FOR THE DETECTION OF DDOS ATTACKS IN EMERGENCY NETWORKS**
VERFAHREN, SYSTEM, PROGRAMMELEMENT UND COMPUTERLESBARES MEDIUM ZUR ERKENNUNG VON DDOS-ANGRIFFEN IN NOTFALLNETZWERKEN
PROCÉDÉ, SYSTÈME, ÉLÉMENT DE PROGRAMME ET SUPPORT LISIBLE PAR ORDINATEUR POUR LA DÉTECTION D'ATTAQUES DDOS DANS DES RÉSEAUX D'URGENCE

(43) Date of publication of application: 11.06.2025
(73) Proprietor: Unify Beteiligungsverwaltung GmbH & Co. KG, 81739 München (DE)
(72) Inventor: Grigoropoulos, Charalampos, 15234 Chalandri (GR); Tsiatsikas, Zisis, 55534 Thessaloniki (GR)
(74) Representative: Schaafhausen, Anne

(56) References cited:
- US-A1- 2012 052 872
- US-A1- 2015 070 506
- US-A1- 2016 109 552
- US-A1- 2020 204 582

## Description

The present invention relates to a method, a system, a program element and a computer-readable medium for the detection of DDoS attacks in emergency networks.

Cyber-attacks and more particularly, attacks on emergency centers can have deadly consequences since they will cause the inability of the agents to respond to emergency requests. In particular, a Distributed Denial of Service (DDoS) attack is a malicious attempt to disrupt the regular functioning of a network, service, or website by overwhelming it with a flood of internet traffic. The basic idea behind a DDoS attack is to exhaust the target's resources such as bandwidth, processing power, or memory making it unable to handle legitimate user requests.

US 2020/0204582 A1 describes a method for detecting a denial-of-service attack on a call center, wherein at least one anomaly in calls is detected, and said anomaly is matched to a historical file of previously detected anomalies. If a match is found, the nature of the attack is known as well as the defense means to be used. If no match is found, the anomaly is the sign of an attack, and the call center is able to take any necessary actions by filtering said calls to reduce the disruption of the service provided by the call center.

US 2016/0109552 A1 describes techniques for tracking a current location of a user. An ambient noise signal proximate to a user device is detected using a microphone. Audio sample information may be accessed, where the audio sample information identifies various audio samples and, for each of the audio samples, a source of the corresponding audio sample. Thereafter, a specific audio sample corresponding to the ambient noise signal may be identified. Moreover, a current location of the user device may be determined, based on the source of the specific audio sample.

US 2012/0052872 A1 describes a method of determining a position of a mobile device in a wireless communication network which includes: accessing mobile device audio information from the mobile device; analyzing the mobile device audio information to determine an environmental characteristic of a present environment of the mobile device; and using the environmental characteristic to affect a determination of the position of the mobile device.

Bots, or botnets, play a crucial role in executing DDoS attacks. A botnet is a network of compromised computers often referred to as "zombies" or "bots" which are controlled by a central entity known as the botmaster. These computers are typically infected with malware allowing the botmaster to remotely control them without the owners' knowledge.

DDoS attacks on emergency requests can have severe consequences and pose a significant threat to public safety. These attacks target emergency services, such as police, fire departments, medical facilities, or helplines with the intention of disrupting their ability to receive and respond to urgent requests for assistance. The specific problem of DDoS attacks on emergency requests can be understood in the following ways:
Service disruption: DDoS attacks overwhelm the targeted emergency service's infrastructure such as call centers, communication systems, or websites making them inaccessible or significantly degrading their performance. This disrupts the ability of people in distress or facing emergencies to reach out for immediate help.

Delays in response time: DDoS attacks create a congestion of illegitimate traffic that hampers the emergency service's ability to process and handle genuine emergency requests. The increased load on the infrastructure leads to delays in receiving and responding to urgent calls, potentially putting lives at risk.

Loss of critical information: During a DDoS attack, emergency services may experience communication failures or reduced system functionality. This can result in the loss of crucial information such as user location data, medical history, or details of the emergency situation. Without accurate information, emergency responders may face challenges in providing timely and appropriate assistance.

Public safety concerns: Emergency services play a vital role in maintaining public safety and saving lives. When DDoS attacks disrupt their operations, it can have serious consequences. People who are unable to reach emergency services during critical situations may experience increased harm, and the overall public trust in emergency response systems can be undermined.

Resource diversion: Dealing with a DDoS attack requires allocating resources, time, and effort to mitigate the attack and restore normal service operations. This diversion of resources can strain the emergency service's capacity to handle other emergencies efficiently, potentially impacting their ability to respond to simultaneous incidents.

Mitigating the impact of DDoS attacks on emergency requests requires proactive measures. In particular, one such issue can be the outbreak of silent calls towards one more public-safety answering point (PSAP) centers from the same or different locations using bots or other computer-based applications. The result will be that the emergency services are flooded with fake calls. As per protocol (NENA Standard for 9-1-1 Call Processing; NENA-STA-020.1-2020, April 16,2020) *"The telecommunicator SHOULD continue to monitor the open line until contact is established or the call is disconnected. If the call is disconnected, the telecommunicator SHOULD attempt to re-establish contact once, at a minimum, to determine if assistance is needed",* the DDoS attack would cause wasted emergency resources and delay in responding to real events.

Therefore, the present invention is based on the object to provide a method, system, program element and computer-readable medium for the detection of DDoS attacks in emergency networks. Another object is to identify and reject such malicious silent calls from being answered or analyzed by emergency services. A further object is to provide a corresponding system for detecting DDoS attacks in emergency networks.

This object is solved by a method having the features according to claim 1, a corresponding system having the features of claim 9 as well as a program element having the features of claim 12 and a computer-readable medium having the features of claim 13. Preferred embodiments and/or items of the invention are defined in the respective dependent claims.

The proposed solution relies on the sound, image/video (optionally) and positioning data of different caller or user devices which are taking part in a specific geolocation. In particular, the invention relies in the combination of the audio patterns (optional image/video patterns) along with the positioning data which reveal if a device acts in a legitimate way. Moreover, the detection of a coordinated fake ambient noise DDoS attack is also tackled in the present invention at hand, by combining the levels of sound density (i. e., noise types and levels at the said sources) in each of the examined and suspicious devices.

According to the invention, a method for the detection of Distributed Denial of Service (DDoS) attacks in emergency networks is provided, the method comprises the steps of:
- detecting, by an Emergency Service Routing Proxy, ESRP, of an emergency network, a silent call;
- monitoring, by the ESRP, the silent call for the presence of ambient noise;
- analyzing, by the ESRP, ambient noise to identify a specific sound pattern in case ambient noise has been detected;
- checking, by the ESRP, if there is one or more other parallel silent call and/or callback in one or more Public-safety answering point, PSAP, of the emergency network;
- retrieving, by the ESRP, from a provider call location data of the silent call and the one or more other parallel silent call and/or callback within the last k seconds, in case there are one or more other parallel silent call and/or callback;
- checking, by the ESRP, the call location data of the silent call and the one or more other parallel silent call and/or callback for a location pattern;
- aligning, by the ESRP, any ambient noise and/or any specific sound pattern with the corresponding location pattern for the silent call and the one or more other parallel silent call and/or callback;
- treating, by the ESRP, the silent call according to the standard emergency process, if no alignment has been obtained or treating, by the ESRP, the silent call and/or the one or more other parallel silent call and/or callback as a potential DDoS attack.

In the sense of the invention, an Emergency Service Routing Proxy (ESRP), defined as a functional element of the Next Generation (NG) emergency services architecture, is a Session Initiation Protocol (SIP) proxy server that selects next hop routing within the Emergency Services IP Network (ESlnet) based on location, service Uniform Resource Name (URN), and policy. An ESInet is a managed Internet Protocol (IP) network used for emergency services communications that can be shared among all public safety agencies. Next Generation emergency services will need to support multiple media types in addition to other important features such as transmitting location with the call. This requires a signaling layer that supports session management for media types such as audio, video, messaging, and real-time text. The ESRP is the central entity that monitors the PSAP elements for calls which are considered suspicious.

In the sense of the invention, a silent or unidentified call is a call in which the calling party does not speak when the call is answered. Further, in sense of the invention, a silent or unidentified call is a call type for which the incident type is not known. There is either no sound, or, perhaps, a specific ambient noise that does not make any sense to detect the type of incident. Still, there could be the case that a botnet fakes the background noise in order to mislead the detection mechanisms in the emergency services in a coordinated manner. The present invention tackles all the above-mentioned scenarios.

In the sense of the invention, the term call is not restricted to a pure audio call but includes all other types of media streams that can be used to contact the emergency service to make an emergency call.

In the sense of the invention, an emergency network (for example ESlnet) is a managed IP network that is used for emergency services communications, and which can be shared by all public safety agencies. It provides the IP transport infrastructure upon which independent application platforms and core services can be deployed, including, but not restricted to, those necessary for providing Next Generation 9-1-1/1-1-2 (NG9-1-1/NG1-1-2) services. Emergency networks may be constructed from a mix of dedicated and shared facilities. Emergency networks may be interconnected at local, regional, state, federal, national, and international levels to form an IP-based internetwork (network of networks).

In the sense of the invention, the term aligning, or alignment means that two different data sets can be matched according to certain criteria, i. e. one data set can be verified by another data set according to certain criteria. For example, if someone is running, this is reflected in a change in geo-position or speed data (first dataset) and at the same time a sound recording (second dataset) of this running person should show a specific sound pattern. In the sense of the invention, with the term standard emergency process is meant the normal standardized call handling procedure of the emergency service. For example, that every incoming call is answered be an agent of a PSAP or an Interactive voice response (IVR) of the emergency service according to the standard rules foreseen for this purpose.

In the sense of the invention, under emergency service(s) a set of services is meant which are needed to process an emergency call on an emergency network. It comprises but is not limited to an ESRP, ECRF, LVF, BCF, Bridge, Policy Store, Logging Services, and typical IP services such as DNS and DHCP. ECRF (Emergency Call Routing Function) is a functional element which is a LoST (Location-to-Service Translation) protocol server where location information (either civic address or geo-coordinates) and a Service URN serve as input to a mapping function that returns a URI (Uniform Resource Identifier) used to route an emergency call toward the appropriate PSAP for the caller's location or towards a responder agency. LVF (Location Validation Function) is a functional element that is a LoST protocol server where civic location information is validated against an authoritative database information. A civic address is considered valid if it can be located within the database uniquely, is suitable to provide an accurate route for an emergency call, and adequate and specific enough to direct responders to the right location. BCF (Border Control Function) provides a secure entry into the emergency network for emergency calls presented to the network. The BCF incorporates firewall, admission control, and may include anchoring of session and media as well as other security mechanisms to prevent deliberate or malicious attacks on PSAPs or other entities connected to the network.

In the sense of the invention, a provider also named carrier is a kind of communications service provider (CSP) that provides telecommunications services such as telephony, internet, mobile and data communications access.

In the sense of the invention the maximum of variable k of seconds is predefined to allow for a proper investigation of the background calls, etc. Thus, this variable k can take values between 1 to 300 seconds preferably between 20 to 120 seconds and more preferably about 60 seconds.

According to a preferred embodiment, the method further comprises the steps of:
- requesting, by the ESRP, from one or more PSAPs handling one or more silent call from one or more device, image and/or video data of the silent call and the one or more other parallel silent call and/or callback and analyzing, by the ESRP, the image and/or video data for an image and/or video pattern;
- aligning, by the ESRP, any ambient noise and/or any specific sound pattern and/or any emergency pattern and/or any image and/or video pattern of the silent call and the one or more other parallel silent call and/or callback with the corresponding location pattern for the silent call and the one or more other parallel silent call and/or callback;
- treating, by the ESRP, the silent call according to the standard emergency process, if no alignment has been obtained or treating, by the ESRP, the silent call and/or the one or more other parallel silent call and/or callback as a potential DDoS attack.

The image and/or video data are obtained from one ore more device which initiates or is responsible for the silent call or other one or more silent call because this is the endpoint examined as potential bot/attack device. The ESRP element requests from the PSAP the relevant stream data, as this is the element which handles the active call. The ESRP does not have an active stream with the device.

According to still another preferred embodiment, the method after the step of analyzing ambient noise, the method further comprises analyzing, by the ESRP, the specific sound pattern to identify an emergency pattern.

Further, according to a preferred embodiment, the method after the step of analyzing the specific sound pattern, the method further comprises verifying, by the ESRP, an identified emergency pattern by retrieving, receiving and analyzing additional data regarding the identified emergency pattern from another source.

According to yet another preferred embodiment, the method after the step of checking for one or more other parallel silent call and/or callback in one or more Public-safety answering point, PSAP, of the emergency network, the method further comprises treating, by the ESRP, the silent call according to the standard emergency process, if no other parallel silent call and/or callback is found.

According to still another preferred embodiment, the other source comprises social media, smart city sensors, or even meteorological stations which present sudden deviations in the monitored temperature and/or related incident types. The image and/or video correlation with verified information that have been posted on social media may be helpful to identify a fake call.

Further, according to another preferred embodiment, the specific sound pattern comprises walking sound patterns, running sound patterns, environmental sound patterns, office sound patterns, crowd sound patterns, water or waves sound patterns, traffic sound patterns, alarm sound patterns, extraneous speech sound patterns, bioacoustics sound patterns from animals, and electrical sound patterns from devices such as refrigerators, air conditioning, power supplies, motors and/or weather sound patterns (e. g. rain, thunderstorm).

Further, according to another preferred embodiment, the emergency sound pattern comprises weapon shot, alarm, explosion, human screaming, and/or crackling and popping noises when a fire is burning something.

According to the invention, a system for the detection of Distributed Denial of Service, DDoS, attacks in emergency networks is provided, the system is configured to perform steps of the method.

According to a preferred embodiment, the system comprises one or more Emergency Services Routing Proxy, ESRP, one or more Public-safety answering point, PSAP, one or more network service provider, a recorder element which is used to monitor and track the stream of emergency calls, and/or a media server may be present in the architecture as well as a session border controller (SBC).

According to another preferred embodiment, the system comprises an application, a software and/or an associated service, wherein the application, the software and/or the associated service support the ESRP in handling, analysis and/or verification of different types of data and/or communication with the different PSAP elements.

According to yet another aspect of the present invention, a program element is provided which when being executed by a processor is adapted to carry out steps of the method for the detection of Distributed Denial of Service, DDoS, attacks in emergency networks.

According to another aspect of the present invention, a computer-readable medium comprising program code is provided which when being executed by a processor is adapted to carry out steps of the method for the detection of Distributed Denial of Service, DDoS, attacks in emergency networks.

A computer-readable medium may be a floppy disk, a hard disk, a USB (Universal Serial Bus) storage device, a RAM (Random Access Memory), a ROM (read only memory) or an EPROM (Erasable Programmable Read Only Memory). A computer-readable medium may also be a data communication network, e. g. the Internet, which may allow downloading a program code.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the apparatus type claims and features relating to the method type claims are considered to be disclosed. The invention and embodiments thereof will be described below in further detail in connection with the drawing(s).
- Fig. 1: schematically shows a flowchart of a basic sequence diagram of the proposed method according to an embodiment of the invention.
- Fig. 2: schematically shows a flowchart or a pocket call scenario according to another embodiment of the invention.
- Fig. 3: schematically shows a flowchart of a Location, Noise and Imaging/Video analysis according to another embodiment of the invention.
- Fig. 4: schematically shows a flowchart of a DDoS scenario with silent calls and ambient noise according to another embodiment of the invention.

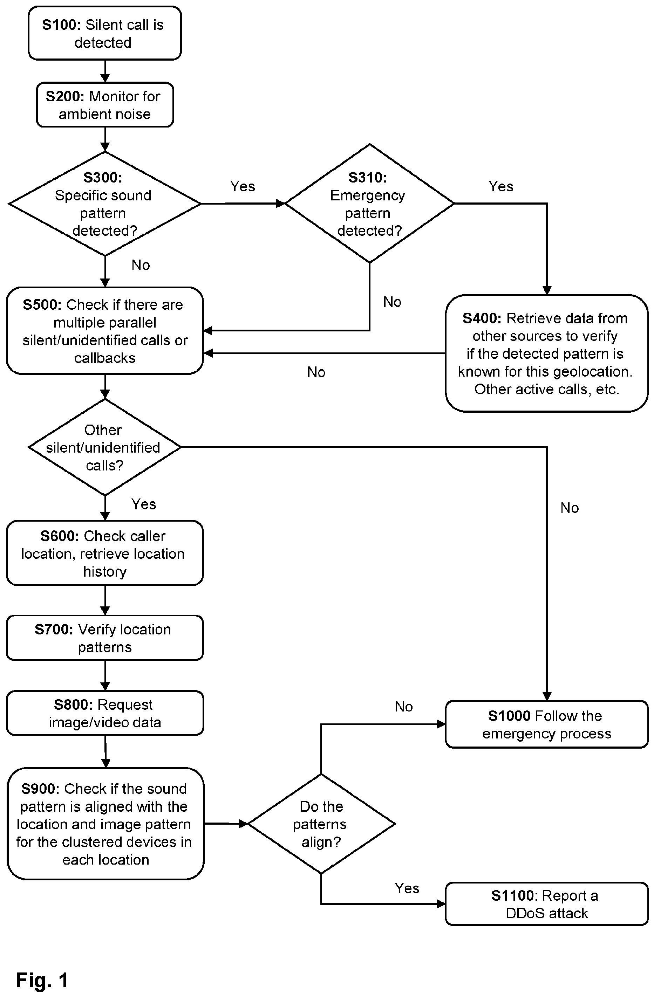

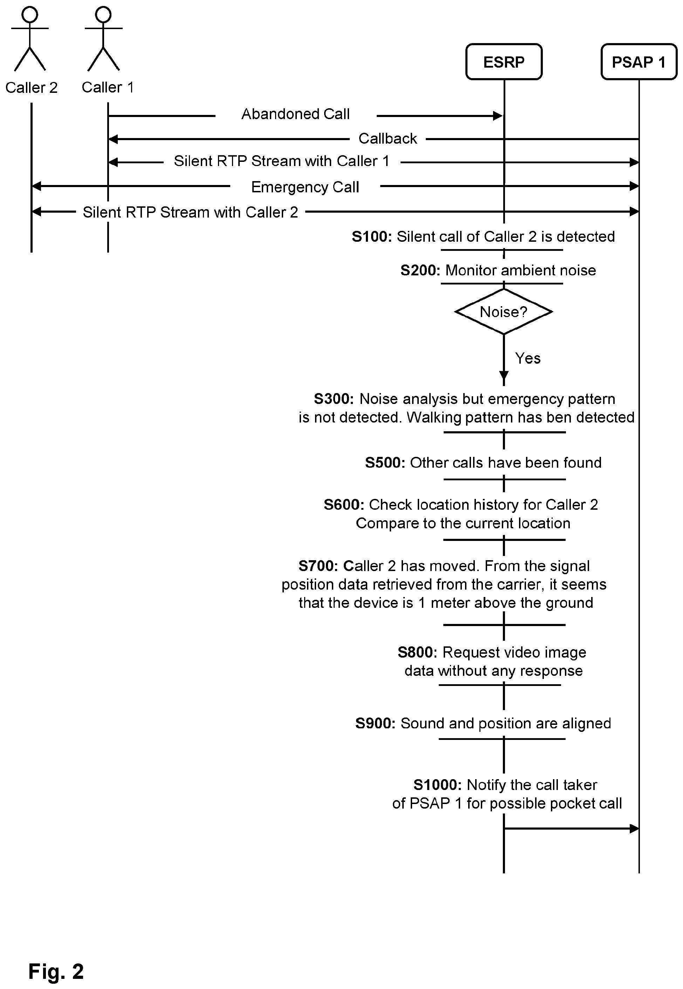

In **Fig. 1** a basic sequence diagram of the proposed method according to an embodiment of the invention is depicted. In a first step S100, a silent/unidentified call is detected in the emergency service, more specific in the ESRP. Basically, this detection can be done preferably using a SUBSCRIBE/NOTIFY mechanism between the ESRP and the PSAP elements. That is, the ESRP subscribes on the PSAP element for a silent/special-type call. When the PSAP element identifies a silent stream, then it sends a NOTIFY to the ESRP element that there is one or more relevant calls. Then the ESRP requests from the PSAP element the relevant stream data for the examined call. It should be noted that the same approach would be followed in case an interactive voice response IVR answers the call in the PSAP side. The SUBSCRIBE/NOTIFY mechanism works in the same way. In sense of the invention, a silent/unidentified call is a call type for which the incident type is not known. There is either no sound, or, perhaps, a specific ambient noise that does not make any sense to detect the type of incident. Still, there could be the case that a botnet fakes the background noise in order to mislead the detection mechanisms in the emergency service in a coordinated manner. The present invention tackles all the above-mentioned scenarios. Further, also the case of accidental pocket calls which may be accidentally established with the emergency service and create frustration are also considered by the present invention (see. Fig. 2 for more details).

In step S200, the ESRP monitors the call stream for the detection of ambient noise.

If ambient noise is found, then an analysis of this noise is performed in step S300 by the ESRP or associated services to identify a specific sound pattern. For example, such pattern can be a specific emergency pattern or a walking or running sound pattern or a sound pattern typically for an office or a crowded atmosphere like a marketplace etc. The focus in step S310 is to detect a specific emergency pattern that will probably reveal an emergency incident, for example, an explosion, gun shots etc.

Then, in step 400 in case an emergency pattern has been identified, other data is retrieved, received and used by the ESRP to verify the emergency pattern in the geolocation of the call.

Thus, for example, if an explosion was identified by the emergency stream, other active calls, social media postings, etc. are retrieved from other sources like social media, smart city sensors, or even meteorological stations which present sudden deviations in the monitored temperature, and used to identify if the detected incident pattern is verified.

In step S500, in case an emergency pattern was not detected or in case it has not been verified by data of other sources, then the emergency service checks if there are multiple parallel silent/unidentified calls or callbacks in the same or other PSAP call centers associated with the ESRP. In case there are no parallel silent/unidentified calls or callbacks present then he emergency service follows the standard handling process by trying to establish a direct contact with the caller and an agent or IVR of the emergency service. However, step S500 is very crucial because it reveals, if there is a parallel action that aims on consuming the emergency service resources by using silent/unidentified active calls.

However, in case the is one or more parallel silent/unidentified call detected in step S500 then in step S600, the emergency service collects location data from the provider for the last k seconds for this one or more parallel silent/unidentified call.

In step S700, the retrieved location data from the provider are used in order to identify a motion pattern. For example, the location data can reveal that there is a static, or a walking, or a running pattern. This can be simply calculated by computing the differences between the different x, y, z coordinates over the k seconds time span retrieved from the provider. If the parallel silent/unidentified call data has been found to have moved the last k seconds, then there is a high chance that this is not a bot or an infected machine.

As an additional optional measure, the emergency service requests in step S800 image/video data from the PSAP. Another approach would be to request the data from smart city cameras or sensors if those are installed in the examined geolocation.

In step S900, all the previously retrieved data of audio, image/video and/or positioning data are combined by the emergency service in order to verify that the identified patterns are aligned. For example, if location data show a movement of 4 km/h, then this should be also aligned with the sound pattern that is probably obtained from this device's microphone. Additionally, if video data have been retrieved, these should be also aligned. And these requirements should be met for all the devices which initiate silent/unidentified calls/streams on the emergency service in the same examined timeframe. A last aspect touched by the proposed method, concerns the alignment of the different sound sources, compared with the relevant positioning data as described above, taking into account that a set of infected bot devices would be assigned the difficult task to replay a fake ambient noise in a way that can deceive the emergency service. This would not be so easy to achieve by an infected device.

Finally, if the emergency service decides upon all the information from the provided data, analysis and alignment of these data that there is no alignment, then in step S1000, the call is processed in accordance with the usual emergency service call processing, meaning a call agent and/or an IVR of the emergency service will handle the call. However, if there is an alignment of the provided data, then in step S1100, the emergency service will report a DDoS attack.

In Fig. 2 a flowchart of a pocket call scenario is shown. This scenario describes the case of a pocket call. Pocket call (also known as pocket dialing or butt dialing) is the accidental placement of a phone call while a person's mobile phone or cordless phone is in the owner's pocket or handbag. The recipient of the call typically hears random background noise when answering the phone. In this case, a user device accidentally initiates an emergency call to the emergency service.

In step S100, a silent call is detected from Caller 2 by the ESRP in PSAP 1. By the term silent it is meant that the user is not responding/talking.

In step S200, the emergency service monitors for the presents of ambient noise and detects the presence of an ambient noise. In the next step S300, an audio analysis is performed by the emergency service. This analysis reveals a specific pattern but not an emergency pattern. This specific pattern in this case is, for example, a walking pattern. Thereby, the audio analysis is executed using, for example, Algermissen, S.; Hörnlein, M. Person Identification by Footstep Sound Using Convolutional Neural Networks. Appl. Mech. 2021, 2(2), 257-273 (https://doi.org/10.3390/app/mech2020016*)* and similar methods. In this case, no additional data is used from other sources like social media, etc., although this could of course also be done here.

Then in step S500, one additional parallel silent/unidentified call (abandoned call and callback regarding Caller 1) is present in the same (PSAP 1) or other PSAP so there is an indication that this could be part of a DDoS attack.

In step S600 and step S700, the emergency service retrieves from the provider the location history for Caller 2 for the last 500 seconds (e. g. one value per 5 seconds). The provider returns a set of 3D position points. Based on simple calculations (e. g. placing the position values on a map), the emergency service identifies that the user device of Caller 2 was moving for the last 120 seconds and this movement is also aligned with the audio analysis. Such analysis is depicted, for example, in Algermissen, S.; Hörnlein, M. Personldentification by Footstep Sound Using Convolutional Neural Networks. Appl. Mech. 2021, 2(2), 257-273 and Jürgen T. Geiger, Maximilian Kneißl, Björn Schuller and Gerhard Rigoll. Acoustic Gait-based Person Identification using Hidden Markov Models. 2014 (https://doi.org/10.48550/arXiv. 1406.2895*).* According to the 3D positioning data, it seems that the user device is located, on average, at a height of around 1 meter above the ground.

In step S800, the emergency service requests video image data from the open, stream for example, through audio commands. In this case, there is no response.

Then in step S900, the emergency service tries to align the sound and location/position patterns. It is found that the audio pattern of someone walking is verified from the positioning data and the walking pace is also verified. Verification can be performed, for example, according to US 10,572,723 B2.

In step S1000, a notification is send to the call taker (agent in the PSAP 1) that indicates that the examined call is probably a pocket call. However, due to the NENA or EENA regulations, the responsible PSAP agent must in any case make a callback to finally clarify the situation.

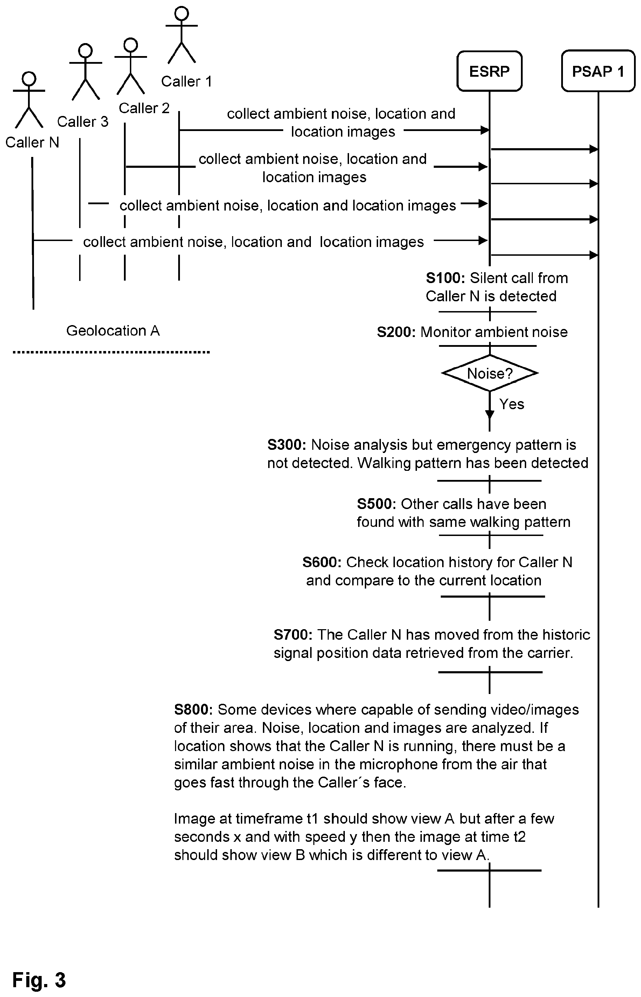

**In** **Fig. 3****,** a flowchart of a location, noise and imaging/video analysis according to another embodiment of the invention is shown. In this scenario, the data from the ambient noise, the location data and the image and/or video data (step S800) of other callers or devices (Caller 1, 2, 3, N) are collected. Then these data are combined in a way to prove that the generated sound and image in each device can be related with the location pattern. Example studies that do such comparisons are, for example, Sascha Heyer, Towards Data Science, April 2022, https://towardsdatascience.com/image-similarity-with-deep-learning-c17d83068f59 and Robert Wood, "Calculating Speed using Video Analysis." Topend Sports Website, May 2010, https.//www.topendsports.com/biomechanics/video-analysis-speed.htm, accessed 21 October 2023*.*

For example, if a caller (device) is running with 4 km/h, this should create a specific pattern in the device's microphone. In order to find out, if the wind speed is indeed produced from the input sound, this can be simply done by correlating the positioning data of the device with the sound perceived in the microphone as it is described in US 9,343,056 B1. If these pieces of information match, the device is then considered to act normally. On the other hand, if it is found, e. g. five devices whose imaging is not in sync with the retrieved speed/location they will get blacklisted and marked as potential DDoS attack. Of course, this output should also be correlated with the fact that other devices act in the same way in the same geolocation.

In particular, in step S800, some devices where capable of sending video/images of their area. Noise, location and images are analyzed. If location shows that the Caller N is running, there must be a similar ambient noise in the microphone from the air that goes fast through the Caller's face. Thus, the image at timeframe t1 should show view A but after a few seconds (3 - 180 seconds) and with a certain speed (e. g. 4 km/h) then the image at timeframe t2 should show view B which is different to view A. This could be done for example if the location of the pictures comprise metadata, so it is very straight forward to identify that the location is different and it has been covered in the relevant speed identified by the sound sample.

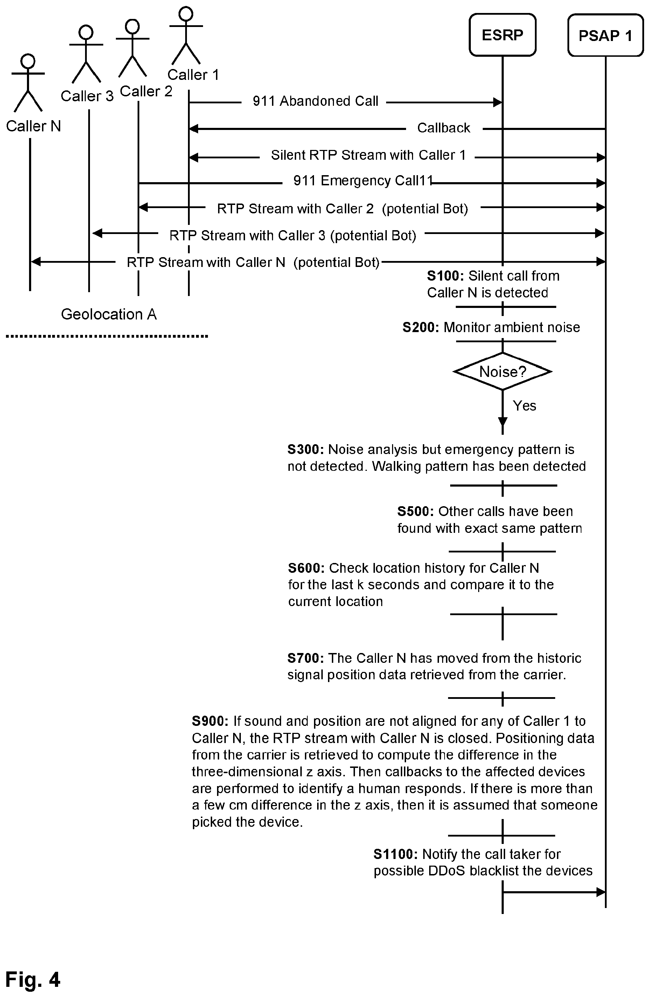

**In** **Fig. 4** a flowchart of a DDoS scenario with silent calls and ambient noise according to another embodiment of the invention is depicted. In this scenario, bots (Bot 1, Bot 2, Bot N) try to fake an ambient noise in a coordinated manner. The point is to deceive the emergency service regarding (1) the incident type, or (2) the conditions of the incident. It is assumed that the devices are located in a close position, with a distance between them varying from r to m, and the ambient noise pattern is the same. From the two following references, it is easily perceivable that even a very loud source, like for example 110db, will be perceived as a normal level discussion if it is reduced in the level of 70 db. This means that a distance of approx. 30-60 meters (r to m) have to be covered. The level of sound perceived by the bot devices its crucial because the lowest the sound level, the more the vague sound that is perceived by the devices, the longer the distance that the sound comes from, and the bigger the area that needs to be evaluated by the emergency service for potential incidents that need to be crosschecked. From the attacker perspective, these would be the different factors taken into account to launch a successful botnet attack as described in this document.

### 1. https://decibe/pro.app/blog/decibe/-chart-of-common-sound-sources/

*2.* *https:*//*www.sweetwater.com*/*insync*/*inverse-square-law*/*#:~:text=Useful%20when%20sett ing%20up%20up,of%20distance%20from%20the%20source.* The sound pattern recognition can be achieved using, for example, the method described in Ketan Doshi, "Audio Deep Learning Made Simple: Sound Classification, Step-by-Step", Towards Data Science, March 2021, https://towardsdatascience.com/audio-deep-learning-made-simple-sound-classification -step-by-step-cebc936bbe5*.* The issue here is that the bots will not easily be able to play the fake ambient noise in a correct way. This is because some devices may be closer to the sound source and others could be far away. Thus, the perceived level of sound should not be the same.

Upon detecting in step S900 that all suspicious devices have the same ambient background noise, the emergency service will identify the level of ambient noise in each device. This can be achieved using, for example, US 2018/0167677 A1. The emergency service will compare the ambient noise levels and based on the devices locations it will infer if the devices (aka the bots) are acting maliciously. Among the different devices, the one which has the maximum ambient noise will be used as a reference, because it is considered to be closer to the sound source. All other devices should receive the corresponding level of sound, based on the teachings of *https:*//*www.acoustica*/*.co.uk*/*distance-attenuation*/*how-sound-reduces-with-distance-from-a-point-source*/*.* So, if, for example, the maximum ambient noise is perceived in a first device at a level of 40 dB, and this is the maximum between all the devices, then it should be perceived accordingly by the rest of the devices as well. From the provider the emergency service knows the positioning data and thus, it is easily decided which device should receive approximately what level of the same ambient noise level. The approximation is due to the fact that noise levels may be affected by obstacles. But even with this parameter in mind, it is not possible for a second device which is at a 6 m distance from the first device to perceive more than a third device which is at 2 m distance from the first device. The botnet should act in a very intelligent way to overcome this barrier, and this would most probably compromise the silent activity of a malicious software running in a mobile device.

In such a case, the proposed method will be used as in the previous embodiments, but with the difference that in step S500 other calls are found having the exact same pattern. The proposed method collects data for N calls by just identifying the walking pattern. Where N is a natural number.

In step S600, the data from the provider are retrieved regarding the examined device for the last k seconds.

In step S700, it is identified that the difference of the data infers a movement and thus it is identified that the caller (aka the corresponding device) has moved.

In step S800, the emergency service asks the PSAP element to provide video/image data which are originated from the examined caller (aka the corresponding device of the caller), but there is no response.

In step S900, it is identified that based on the positioning data, the examined caller (aka the corresponding device of the caller) is moving very fast with a running pace (described, for example, in US 10,572,723 B2), whereas the audio pattern indicates that the caller walks (described, for example, in US 9,343,056 B1 and Algermissen, S.; Hörnlein, M.Person Identification by Footstep Sound Using Convolutional Neural Networks. Appl. Mech. 2021, 2(2), 257-273*).* Similar inconsistency is detected for the other parallel silent calls.

The emergency service hangs up the calls and performs a callback to the callers. Prior to this action, the emergency service checks the network coverage of the caller (e. g. disclosed in *https:*//*www.gsma.com*/*coverage*/ and *https:*//*www.nperf.com*/*en*/*map*/*5g*) and the load in the corresponding antenna by requesting the load level from the provider, in order to avoid a situation in which the user cannot be contacted again. If this is the case, the emergency service closes the session and performs a callback to the caller. If the caller responds to the callback by a call taker (agent of a PSAP) or an IVR of the emergency service, the emergency service retrieves data from the provider for the last k seconds to identify if there is a change of the device in three-dimensional axis z, for example, in a few cm. If this is aligned with the user's response (meaning that a human voice response can be recognized), then it is an indication that a caller has responded and not a bot. Variable k can take values between 1 to 300 seconds, preferably between 20 to 120 seconds, more preferably about 60 seconds.

The same procedure is also followed for the rest of the suspicious calls considered as silent/unidentified.

In the last step S1100, the call taker is notified about the unverified calls and the possible DDoS incident.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- DDoS attack: Distributed Denial of Service attack
- ESRP: Emergency service routing proxy
- PSAP: Public-safety answering point
- N: variable natural number
- RTP Stream: Real-time transport protocol stream
- t1, t2: timeframes 1 and 2
- k: time variable
- z: three-dimensional axis

- S100 - S1100: method steps S100 - S1100

## Claims

1. A method for the detection of Distributed Denial of Service, DDoS, attacks in emergency networks, wherein the method comprises the steps of:
- (S100) detecting, by an Emergency Service Routing Proxy, ESRP, of an emergency network, a silent call;
- (S200) monitoring, by the ESRP, the silent call for the presence of ambient noise;
- (S300) analyzing, by the ESRP, ambient noise to identify a specific sound pattern in case ambient noise has been detected;
- (S500) checking, by the ESRP, if there is one or more other parallel silent call and/or callback in one or more Public-safety answering point, PSAP, of the emergency network;
- (S600) retrieving, by the ESRP, from a provider call location data of the silent call and the one or more other parallel silent call and/or callback within the last k seconds, in case there are one or more other parallel silent call and/or callback;
- (S700) checking, by the ESRP, the call location data of the silent call and the one or more other parallel silent call and/or callback for a location pattern;
- (S900) aligning, by the ESRP, any ambient noise and/or any specific sound pattern with the corresponding location pattern for the silent call and the one or more other parallel silent call and/or callback;
- (S1000) treating, by the ESRP, the silent call according to the standard emergency process, if no alignment has been obtained or (S1100) treating, by the ESRP, the silent call and/or the one or more other parallel silent call and/or callback as a potential DDoS attack.

2. The method according to claim 1, wherein the method after (S700) checking, by the ESRP, the call location data of the silent call and the one or more other parallel silent call and/or callback for a location pattern, and instead of the aligning step (S900) and the treating steps (S1000, S1100), further comprises the steps of:
- (S800) requesting, by the ESRP, from one or more PSAPs handling one or more silent call from one or more device, image and/or video data of the silent call and the one or more other parallel silent call and/or callback and analyzing, by the ESRP, the image and/or video data for an image and/or video pattern;
- (S900) aligning, by the ESRP, any ambient noise and/or any specific sound pattern and/or any emergency pattern and/or any image and/or video pattern of the silent call and the one or more other parallel silent call and/or callback with the corresponding location pattern for the silent call and the one or more other parallel silent call and/or callback;
- (S1000) treating, by the ESRP, the silent call according to the standard emergency process, if no alignment has been obtained or (S1100) treating, by the ESRP, the silent call and/or the one or more other parallel silent call and/or callback as a potential DDoS attack.

3. The method according to any one of the preceding claims, wherein, after the step of analyzing ambient noise, the method further comprises (S310) analyzing, by the ESRP, the specific sound pattern to identify an emergency pattern.

4. The method according to claim 3, wherein, after the step of analyzing the specific sound pattern, the method further comprises (S400) verifying, by the ESRP, an identified emergency pattern by retrieving, receiving and analyzing additional data regarding the identified emergency pattern form another source.

5. The method according to any one of the preceding claims, wherein, after the step of checking for one or more other parallel silent call and/or callback in one or more Public-safety answering point, PSAP, of the emergency network, the method further comprises (S1000) treating, by the ESRP, the silent call according to the standard emergency process, if no other parallel silent call and/or callback is found.

6. The method according to claim 4, wherein the another source comprises social media,
smart city sensors, meteorological stations which present sudden deviations in the monitored temperature and/or related incident types.

7. The method according to any one of the preceding claims, wherein the specific sound pattern comprises walking sound patterns, running sound patterns, environmental sound patterns, office sound patterns, crowd sound patterns, water or waves sound patterns, traffic sound patterns, alarm sound patterns, extraneous speech sound patterns, bioacoustics sound patterns from animals, and electrical sound patterns from devices such as refrigerators, air conditioning, power supplies, motors and/or weather sound patterns.

8. The method according to claims 3, 4, or 6, wherein the emergency pattern comprises weapon shot, alarm, explosion, human screaming, and/or crackling and popping noises when a fire is burning something.

9. A system for the detection of Distributed Denial of Service, DDoS, attacks in emergency networks, wherein the system is configured to perform the method according to any one of the claims 1 to 8.

10. The system according to claim 9, wherein the system comprises:
- one or more Emergency Service Routing Proxy, ESRP;
- one or more Public-safety answering point, PSAP;
- one or more network service provider;
- a recorder element which is used to monitor and track the stream of emergency calls,
- a media server, and/or
- an session border controller, SBC.

11. The System according to any one of the claims 9 or 10, wherein the system comprises an application, a software and/or an associated service each supporting the ESRP in handling, analysis and/or verification of different types of data and/or communication with the different PSAP elements.

12. A program element which, when being executed by a processor, is adapted to carry out steps of the method for the detection of Distributed Denial of Service, DDoS, attacks in emergency networks according to any one of the claims 1 - 8.

13. A computer-readable medium comprising program code which, when being executed by a processor, is adapted to carry out steps of the method for the detection of Distributed Denial of Service, DDoS, attacks in emergency networks according to any one of the claims 1 - 8.

## Patentansprüche

1. Verfahren zum Erkennen von Distributed-Denial-of-Service, DDoS, -Angriffen in Notfallnetzen, wobei das Verfahren die folgenden Schritte umfasst:
- (S100) Erkennung eines stummen Anrufs durch einen Emergency Service Routing Proxy, ESRP, eines Notfallnetzwerks;
- (S200) Überwachung, durch den ESRP, des stummen Anrufs auf das Vorhandensein von Umgebungsgeräuschen;
- (S300) Analyse, durch den ESRP, der Umgebungsgeräusche zur Identifizierung eines spezifischen Klangmusters, falls Umgebungsgeräusche erkannt wurden;
- (S500) Überprüfung, durch den ESRP, ob ein oder mehrere weitere parallele stille Anrufe und/oder Rückrufe in einer oder mehreren Notrufzentralen (Public-safety answering point, PSAP) des Notfallnetzwerks vorliegen;
- (S600) Abrufen, durch das ESRP, von Standortdaten des stillen Anrufs und des einen oder der mehreren anderen parallelen stillen Anrufe und/oder Rückrufe innerhalb der letzten k Sekunden von einem Anbieter, falls ein oder mehrere andere parallele stille Anrufe und/oder Rückrufe vorliegen;
- (S700) Überprüfung, durch den ESRP, der Standortdaten des stillen Anrufs und des einen oder der mehreren anderen parallelen stillen Anrufe und/oder Rückrufe auf ein Standortmuster;
- (S900) Abgleichen, durch den ESRP, von Umgebungsgeräuschen und/oder spezifischen Klangmustern mit dem entsprechenden Standortmuster für den stillen Anruf und den einen oder die mehreren anderen parallelen stillen Anrufe und/oder Rückrufe;
- (S1000) Behandlung, durch den ESRP, des stillen Anrufs gemäß dem Standard-Notfallprozess, falls keine Übereinstimmung erzielt wurde, oder (S1100) Behandlung, durch den ESRP, des stillen Anrufs und/oder des einen oder der mehreren anderen parallelen stillen Anrufe und/oder Rückrufe als potenziellen DDoS-Angriff.

2. Verfahren nach Anspruch 1, wobei das Verfahren nach (S700), Überprüfung, durch das ESRP, der Standortdaten des stillen Anrufs und des einen oder der mehreren anderen parallelen stillen Anrufe und/oder Rückrufe auf ein Standortmuster, und anstelle des Abgleichschritts (S900) und der Behandlungsschritte (S1000, S1100) ferner die folgenden Schritte umfasst:
- (S800) Anfordern, durch den ESRP, von Bild- und/oder Videodaten des stillen Anrufs und des einen oder der mehreren anderen parallelen stillen Anrufe und/oder Rückrufe von einer oder mehreren Notrufzentralen (PSAPs), die einen oder mehrere stille Anrufe von einem oder mehreren Geräten bearbeiten, sowie Analyse, durch den ESRP, der Bild- und/oder Videodaten auf ein Bild- und/oder Videomuster;
- (S900) Abgleichen, durch den ESRP, von Umgebungsgeräuschen und/oder spezifischen Klangmustern und/oder Notfallmustern und/oder Bild- und/oder Videomustern des stummen Anrufs und des einen oder der mehreren anderen parallelen stummen Anrufe und/oder Rückrufe mit dem entsprechenden Standortmuster für den stummen Anruf und den einen oder die mehreren anderen parallelen stummen Anrufe und/oder Rückrufe;
- (S1000) Behandlung, durch das ESRP, des stillen Anrufs gemäß dem Standard-Notfallprozess, falls keine Übereinstimmung erzielt wurde, oder (S1100) Behandlung, durch das ESRP, des stillen Anrufs und/oder des einen oder der mehreren anderen parallelen stillen Anrufe und/oder Rückrufe als potenziellen DDoS-Angriff.

3. Verfahren nach einem der vorhergehenden Ansprüche, wobei das Verfahren nach dem Schritt der Analyse des Umgebungsgeräuschs ferner den Schritt (S310) Analyse, durch das ESRP, des spezifischen Klangmusters zur Identifizierung eines Notfallmusters, umfasst.

4. Verfahren nach Anspruch 3, wobei das Verfahren nach dem Schritt der Analyse des spezifischen Klangmusters ferner den Schritt (S400) Überprüfung, durch das ESRP, eines identifizierten Notfallmusters durch Abrufen, Empfangen und Analysieren zusätzlicher Daten zu dem identifizierten Notfallmuster aus einer anderen Quelle, umfasst.

5. Verfahren nach einem der vorhergehenden Ansprüche, wobei das Verfahren nach dem Schritt der Überprüfung auf einen oder mehrere andere parallele stille Anrufe und/oder Rückrufe in einer oder mehreren Notrufzentralen (PSAP) des Notfallnetzwerks ferner den Schritt (S1000) Behandlung, durch das ESRP, des stillen Anrufs gemäß dem Standard-Notfallprozess, umfasst, wenn kein anderer paralleler stiller Anruf und/oder Rückruf festgestellt wird.

6. Verfahren nach Anspruch 4, wobei die andere Quelle soziale Medien, Smart-City-Sensoren, Wetterstationen umfasst, die plötzliche Abweichungen bei der überwachten Temperatur und/oder damit zusammenhängende Ereignistypen zeigen.

7. Verfahren nach einem der vorhergehenden Ansprüche, wobei das spezifische Klangmuster Klangmuster von Schritten, Laufgeräuschen, Umgebungsgeräuschen, Bürogeräuschen, Menschenmengen, Wasser- oder Wellen, Verkehrslärm, Alarmsignalen, fremden Sprachgeräuschen, bioakustischen Geräuschen von Tieren sowie elektrischen Geräuschen von Geräten wie Kühlschränken, Klimaanlagen, Stromversorgungen, Motoren und/oder Wettergeräusche umfasst.

8. Verfahren nach den Ansprüchen 3, 4 oder 6, wobei das Notfallmuster Waffenschüsse, Alarmsignale, Explosionen, menschliche Schreie und/oder Knistern und Knacken umfasst, wenn ein Feuer etwas verbrennt.

9. System zur Erkennung von Distributed-Denial-of-Service-Angriffen, DDoS-Angriffen, in Notfallnetzwerken, wobei das System so konfiguriert ist, dass es das Verfahren nach einem der Ansprüche 1 bis 8 ausführt.

10. System gemäß Anspruch 9, wobei das System Folgendes umfasst:
- einen oder mehrere Emergency Service Routing Proxys, ESRP;
- eine oder mehrere Notrufzentralen, PSAP;
- einen oder mehrere Netzwerkanbieter;
- ein Aufzeichnungselement, das zur Überwachung und Verfolgung des Notrufstroms dient,
- einen Medienserver und/oder
- einen Session Border Controller, SBC.

11. System nach einem der Ansprüche 9 oder 10, wobei das System eine Anwendung, eine Software und/oder einen zugehörigen Dienst umfasst, die bzw. der jeweils den ESRP bei der Bearbeitung, Analyse und/oder Überprüfung verschiedener Typen von Daten und/oder der Kommunikation mit den verschiedenen PSAP-Elementen unterstützt.

12. Programmelement, das bei Ausführung durch einen Prozessor dazu ausgelegt ist, Schritte des Verfahrens zur Erkennung von Distributed-Denial-of-Service-Angriffen, DDoS-Angriffen, in Notfallnetzwerken gemäß einem der Ansprüche 1 bis 8 auszuführen.

13. Computerlesbares Medium, das Programmcode umfasst, der bei Ausführung durch einen Prozessor dazu ausgelegt ist, Schritte des Verfahrens zur Erkennung von Distributed-Denial-of-Service-Angriffen, DDoS-Angriffen, in Notfallnetzwerken gemäß einem der Ansprüche 1 bis 8 auszuführen.

## Revendications

1. Procédé de détection d'attaques par déni de service distribué, DDoS, dans des réseaux d'urgence, le procédé comprenant les étapes suivantes :
- (S100) la detection d'un appel silencieux par un proxy de routage des services d'urgence, ESRP, d'un réseau d'urgence;
- (S200) la surveillance, par l'ESRP, de l'appel silencieux afin de détecter la présence de bruit ambiant ;
- (S300) l'analyse, par l'ESRP, du bruit ambiant afin d'identifier un motif sonore spécifique dans le cas où un bruit ambiant aurait été détecté ;
- (S500) la vérification, par l'ESRP, de l'existence d'un ou plusieurs autres appels et/ou rappels silencieux parallèles dans un ou plusieurs centres de réception des appels d'urgence, PSAP, du réseau d'urgence ;
- (S600) la récupération auprès d'un opérateur, par l'ESRP, des données de localisation de l'appel silencieux et du ou des autres appels et/ou rappels silencieux parallèles au cours des k dernières secondes, dans le cas où il existerait un ou plusieurs autres appels et/ou rappels silencieux parallèles ;
- (S700) la vérification, par l'ESRP, des données de localisation de l'appel silencieux et du ou des autres appels et/ou rappels silencieux parallèles, dans le but de détecter un profil de localisation ;
- (S900) l'alignement, par l'ESRP, de tout bruit ambiant et/ou profil sonore spécifique avec le profil de localisation correspondant pour l'appel silencieux et le ou les autres appels et/ou rappels silencieux parallèles ;
- (S1000) le traitement, par l'ESRP, de l'appel silencieux conformément à la procédure d'urgence standard, si aucun alignement n'a été obtenu, ou (S1100) traitement, par l'ESRP, de l'appel silencieux et/ou du ou des autres appels et/ou rappels silencieux parallèles comme une attaque DDoS potentielle.

2. Procédé selon la revendication 1, dans lequel après (S700), la vérification, par l'ESRP, des données de localisation de l'appel silencieux et d'un ou plusieurs autres appels et/ou rappels silencieux parallèles dans le but de détecter un profil de localisation, et au lieu de l'étape d'alignement (S900) et des étapes de traitement (S1000, S1100), le procédé comprend également les étapes suivantes :
- (S800) la demande, par l'ESRP, auprès d'un ou plusieurs PSAP traitant un ou plusieurs appels silencieux provenant d'un ou plusieurs appareils, de données d'image et/ou de vidéo relatives à l'appel silencieux et au ou aux autres appels et/ou rappels silencieux parallèles, et l'analyse, par l'ESRP, des données d'image et/ou de vidéo à la recherche d'un profil d'image et/ou de vidéo ;
- (S900) l'alignement, par l'ESRP, de tout bruit ambiant et/ou de tout profil sonore spécifique et/ou de tout profil d'urgence et/ou de tout profil d'image et/ou de vidéo de l'appel silencieux et du ou des autres appels et/ou rappels silencieux parallèles avec le profil de localisation correspondant pour l'appel silencieux et le ou les autres appels et/ou rappels silencieux parallèles ;
- (S1000) le traitement, par l'ESRP, de l'appel silencieux conformément à la procédure d'urgence standard, si aucun alignement n'a été obtenu, ou (S1100) traitement, par l'ESRP, de l'appel silencieux et/ou du ou des autres appels et/ou rappels silencieux parallèles comme une attaque DDoS potentielle.

3. Procédé selon l'une des revendications précédentes, dans lequel, après l'étape d'analyse du bruit ambiant, le procédé comprend également (S310) l'analyse, par l'ESRP, du profil sonore spécifique afin d'identifier un profil d'urgence.

4. Procédé selon la revendication 3, dans lequel, après l'étape d'analyse du profil sonore spécifique, le procédé comprend également (S400) la vérification, par l'ESRP, d'un profil d'urgence identifié en récupérant, recevant et analysant des données supplémentaires concernant le profil d'urgence identifié à partir d'une autre source.

5. Procédé selon l'une des revendications précédentes, dans lequel, après l'étape de vérification de la présence d'un ou plusieurs autres appels et/ou rappels silencieux parallèles dans un ou plusieurs centres de réception des appels d'urgence, PSAP, du réseau d'urgence, le procédé comprend également (S1000) le traitement, par l'ESRP, de l'appel silencieux conformément à la procédure d'urgence standard, si aucun autre appel et/ou rappel silencieux parallèle n'est détecté.

6. Procédé selon la revendication 4, dans lequel l'autre source comprend des réseaux sociaux, des capteurs de ville intelligente, des stations météorologiques, lesquels présentent des écarts soudains de la température surveillée et/ou des types d'incidents associés.

7. Procédé selon l'une des revendications précédentes, dans lequel le profil sonore spécifique comprend des profils sonores de marche, de course, d'environnement, de bureau, de foule, d'eau ou de vagues, de circulation, d'alarme, de paroles parasites, des profils sonores bioacoustiques provenant d'animaux, ainsi que des profils sonores électriques provenant d'appareils tels que des réfrigérateurs, des climatiseurs, des alimentations électriques, des moteurs et/ou des profils sonores liés aux conditions météorologiques.

8. Procédé selon les revendications 3, 4 ou 6, dans lequel le profil d'urgence comprend des coups de feu, une alarme, une explosion, des cris humains et/ou des bruits de craquements et de claquement lorsque le feu consume un objet.

9. Système de détection des attaques par déni de service distribué, DDoS, dans des réseaux d'urgence, le système étant configuré pour exécuter le procédé selon l'une des revendications 1 à 8.

10. Système selon la revendication 9, le système comprenant :
- un ou plusieurs proxys de routage des services d'urgence, ESRP ;
- un ou plusieurs centres de réception des appels d'urgence, PSAP ;
- un ou plusieurs fournisseurs de services réseau ;
- un élément d'enregistrement utilisé pour surveiller et suivre le flux d'appels d'urgence,
- un serveur multimédia, et/ou
- un contrôleur de frontière de session, SBC.

11. Système selon l'une des revendications 9 ou 10, le système comprenant une application, un logiciel et/ou un service associé, chacun d'entre eux aidant l'ESRP à traiter, analyser et/ou vérifier différents types de données et/ou de communication avec les différents éléments PSAP.

12. Élément de programme qui, lorsqu'il est exécuté par un processeur, est adapté pour exécuter les étapes du procédé de détection d'attaques par déni de service distribué, DDoS, dans des réseaux d'urgence selon l'une des revendications 1 à 8.

13. Support lisible par ordinateur comprenant un code de programme qui, lorsqu'il est exécuté par un processeur, est adapté pour exécuter les étapes du procédé de détection d'attaques par déni de service distribué, DDoS, dans des réseaux d'urgence selon l'une des revendications 1 à 8.
